# EUROPÄISCHE PATENTSCHRIFT

(11) **EP 1 611 358 B1**
(45) Veröffentlichungstag und Bekanntmachung des Hinweises auf die Patenterteilung: **24.10.2007**
(21) Anmeldenummer: 04725668.0
(22) Anmeldetag: 05.04.2004
(51) Int. Cl.: F15B 13/01, F15B 13/043, F15B 13/044, F16K 31/40

(54) **STETIG VERSTELLBARES WEGEVENTIL**
INFINITELY VARIABLE DIRECTIONAL VALVE
SOUPAPE DE DISTRIBUTION A VARIATION CONTINUE

(30) Priorität: 10.04.2003 DE 10316770; 21.05.2003 DE 10322970
(43) Veröffentlichungstag der Anmeldung: 04.01.2006
(73) Patentinhaber: Bosch Rexroth AG, 70184 Stuttgart (DE)
(72) Erfinder: BIENER, Rainer, 97854 Steinfeld (DE)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/DE2004/000708
(87) Internationale Veröffentlichungsnummer: WO 2004/092591

(56) Entgegenhaltungen:
- EP-A- 0 764 785
- DE-A- 10 030 059
- DE-A- 10 048 600
- US-A- 4 699 351

## Beschreibung

Die Erfindung betrifft ein stetig verstellbares Wegeventil gemäß dem Oberbegriff des Patentanspruches 1.

Ein Solches Wegeventil ist aus US 4 699 351 bekannt.

Derartige proportional verstellbare Wegeventile können beispielsweise als Pilotventile zur Vorsteuerung von Ventilhauptstufen oder aber auch als autarkes Steuerelement in hydraulischen Antrieben verwendet werden. Dabei besteht die Forderung, dass die Druckleitungen zum Verbraucher leckagefrei abgesperrt werden. Diese Leckagefreiheit ermöglicht es, eine Last in einer vorbestimmten Relativposition zu einer Arbeitsmaschine zu halten. Eine Leckagefreiheit ist mit einem Proportionalventil alleine nicht garantierbar, da eine Leckageströmung über die Umfangsflächen des Ventilschiebers nicht ausgeschlossen werden kann.

Eine leckagefreie Einspannung des Verbrauchers ist beispielsweise bei Rohrverlegearbeiten mit einem Bagger erforderlich, bei dem der Ausleger des Baggers ein Rohrstück positioniert und in Position hält bis es verschweißt ist. Bei einer Leckage würde sich diese Relativposition zum bereits verlegten Rohrstück verändern.

Bei herkömmlichen Mobilsteuerblöcken, wie sie beispielsweise aus dem Datenblatt der Anmelderin RD 64 127 (Hydroventile für mobile Anwendungen) bekannt sind, wird zur leckagefreien Absperrung zwischen dem Verbraucher und einem proportional verstellbaren Wegeventil ein Lasthalteventil vorgesehen.

In der DE 196 27 306 A1 ist ein stetig verstellbares Wegeventil mit einem Zulaufkanal, einem Verbraucherkanal und einem Ablaufkanal offenbart, wobei die Verbindung zwischen den Kanälen über einen Ventilschieber auf- bzw. zusteuerbar ist. Im Verbraucherkanal ist ein Sperrventil angeordnet, dessen Ventilkegel gegen einen Ventilsitz vorgespannt ist. Im Ventilkegel ist ein Vorsteuerventilkörper gegen einen Vorsteuerventilsitz vorgespannt. Zum Ermöglichen einer Druckmittelströmung vom Verbraucher über den Verbraucherkanal zum Ablaufkanal der Ventilanordnung wird der Ventilschieber betätigt, wobei ein mit dem Ventilschieber zusammen wirkender Stößel zunächst den Vorsteuerventilkörper von seinem Ventilsitz abhebt, so dass der Ventilkörper des Sperrventils druckausgeglichen wird. Beim weiteren Hub des Ventilschiebers und damit des Stößels bleibt der Druckausgleich wegen einer nur kleinen Ablauföffnung im Ventilschieber weitgehend erhalten, so dass der Ventilkörper von seinem Sitz abgehoben werden kann.

Nachteilig bei den vorbeschriebenen Lösungen ist, dass die zusätzlich vorgesehenen Sperrventile einen erheblichen vorrichtungstechnischen Aufwand erfordern und darüber hinaus den Bauraum der Ventilanordnung vergrößern.

Demgegenüber liegt der Erfindung die Aufgabe zugrunde, ein stetig verstellbares Wegeventil zu schaffen, durch das mit minimalem vorrichtungstechnischen Aufwand eine leckölfreie Absperrung eines Zulaufanschlusses gegenüber einem Ablaufanschluß ermöglicht ist.

Diese Aufgabe wird durch ein stetig verstellbares Wegeventil mit den Merkmalen des Patentanspruches 1 gelöst.

Erfindungsgemäß ist das stetig verstellbare Wegeventil mit einem Sitzschieber ausgeführt, wobei ein Schließkegel des Sitzschiebers gegen einen Ventilsitz vorgespannt ist und über eine Schiebersteuerkante die Verbindung vom Zulauf zum Ablauf aufgesteuert wird. Bei der erfindungsgemäßen Lösung ist des weiteren ein Vorsteuerventilsitz im Bereich des Schließkegels vorgesehen. Gegen diesen Vorsteuerventilsitz ist ein Vorsteuerventilkörper vorgespannt, der zum Öffnen der Vorsteuerung vom Vorsteuerventilsitz abgehoben werden kann.

Erfindungsgemäß ist somit die eine leckölfreie Absperrung ermöglichende Funktion des Sperrventils in den Sitzschieber des Wegeventils integriert, d.h. das erfindungsgemäße 2/2-Wege-Proportionalventil wirkt sowohl als Sperrventil als auch als Proportionalventil.

Bei einer besonders bevorzugten Variante der Erfindung kann der Vorsteuerventilkörper zum Druckausgleich des Sitzschiebers in der Grundposition des Schließkegels von seinem Vorsteuerventilsitz abgehoben werden. D.h. erfindungsgemäß ist keine Axialverschiebung des Sitzschiebers erforderlich, um die Vorsteuerung zu öffnen. Dies stellt einen wesentlichen Unterschied zu der Lösung gemäß der DE 196 27 306 A1 dar, da bei dieser Lösung zur Öffnung der Vorsteuerung der Ventilschieber betätigt werden musste, so dass über das Wegeventil bereits ein Ablaufquerschnitt aufgesteuert wurde.

Erfindungsgemäß läuft der vom Ventilsitz abgehobene Vorsteuerventilkörper nach einem bestimmten Hub auf eine Mitnahmeschulter des Sitzschiebers auf, so dass dieser dann vom Vorsteuerventilkörper mitgenommen und in der Folge die Wegeventilfunktion vom Hub des Vorsteuerventilkörpers abhängt.

Bei einem besonders einfach aufgebauten Ausführungsbeispiel hat der Sitzschieber im Abstand zu dem an einem Endabschnitt ausgebildeten Schließkegel einen Steuerbund mit Steuerkerben und ist von einer Axialbohrung durchsetzt, die im Bereich des Schließkegels zum Vorsteuerventilsitz zurückgestuft ist. Über die durch die Steuerkerben gebildete Steuerkante wird in der Wegeventilfunktion der Ablaufquerschnitt bestimmt.

Bei dieser bevorzugten Lösung ist durch den Schließkegel und den Steuerbund ein Überströmraum in Axialrichtung begrenzt, der mit der Axialbohrung über Querbohrungen des Sitzschiebers verbunden ist.

Es wird des weiteren bevorzugt, dass der Vorsteuerventilkörper außerhalb des Sitzschiebers geführt ist.

Insbesondere bei der letztgenannten Variante kann die Betätigung des Vorsteuerventilkörpers über einen Proportionalmagneten erfolgen, dessen Stößel mit dem Vorsteuerventilkörper verbunden ist. Dabei wird vorzugsweise der Proportionalmagnet als ziehender Magnet ausgeführt.

Bei einer konkreten Lösung hat der Sitzschieber eine Mitnahmeklaue, in die ein Endabschnitt des Vorsteuerventilkörpers eingreift, wobei in der Grundstellung bei geschlossener Vorsteuerung eine rückwärtige, die Mitnahmeschulter ausbildende Wandung der Mitnahmeklaue in einem entsprechenden Abstand zu einer Radialschulter des Vorsteuerventilkörpers ausgeführt ist. Diese Radialschulter läuft bei Axialverschiebung des Vorsteuerventilkörpers auf die Mitnahmeschulter auf, so dass dann der Sitzschieber mitgenommen wird.

In der Wegeventilfunktion erfolgt die Axialverschiebung des Sitzschiebers gegen die Kraft einer Regelfeder, die jedoch erst nach einem vorbestimmten Hub Wirkung entfaltet.

Zusätzlich zur Regelfeder kann eine Nachführfeder mit geringerer Federrate vorgesehen werden, über die der Vorsteuerventilkörper und damit der Sitzschieber in ihre Grundposition vorgespannt sind.

Sonstige vorteilhafte Weiterbildungen der Erfindung sind Gegenstand weiterer Unteransprüche.

Im folgenden wird ein bevorzugtes Ausführungsbeispiel der Erfindung anhand schematischer Zeichnungen näher erläutert. Es zeigen:
Figur 1 eine teilgeschnittene Seitenansicht eines erfindungsgemäßen stetig verstellbaren Wegeventils mit zwei Anschlüssen;
Figur 2 einen Schnitt durch eine Ventilbüchse des Ventils aus Figur 1;
Figur 3 das Wegeventil aus Figur 1 mit geöffnetem Vorsteuerventilsitz;
Figur 4 das Wegeventil aus Figur 1 bei vollständig geöffnetem Vorsteuerventilsitz und zu Beginn der Wegeventilfunktion;
Figur 5 das Wegeventil aus Figur 1 in der Wegeventilfunktion und
Figur 6 eine Kennlinie des stetig verstellbaren Wegeventils.

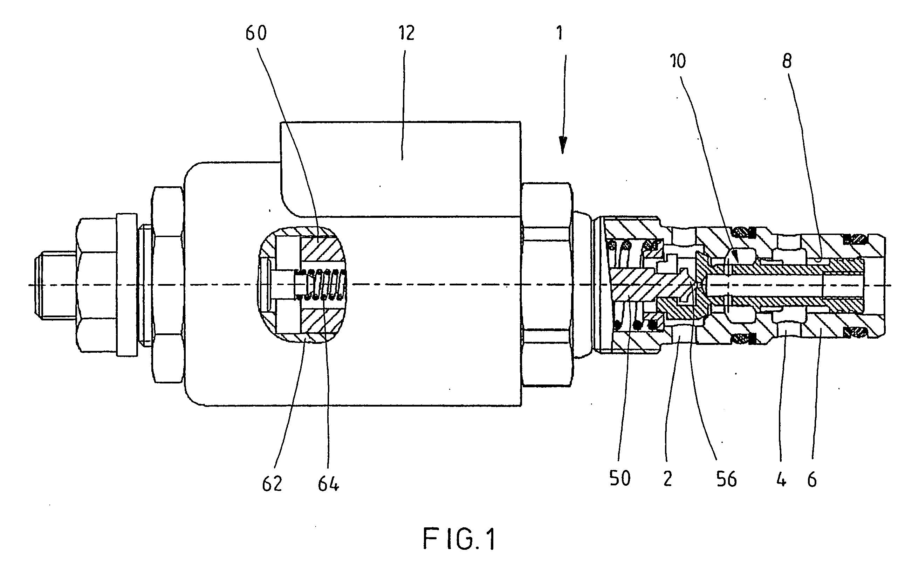

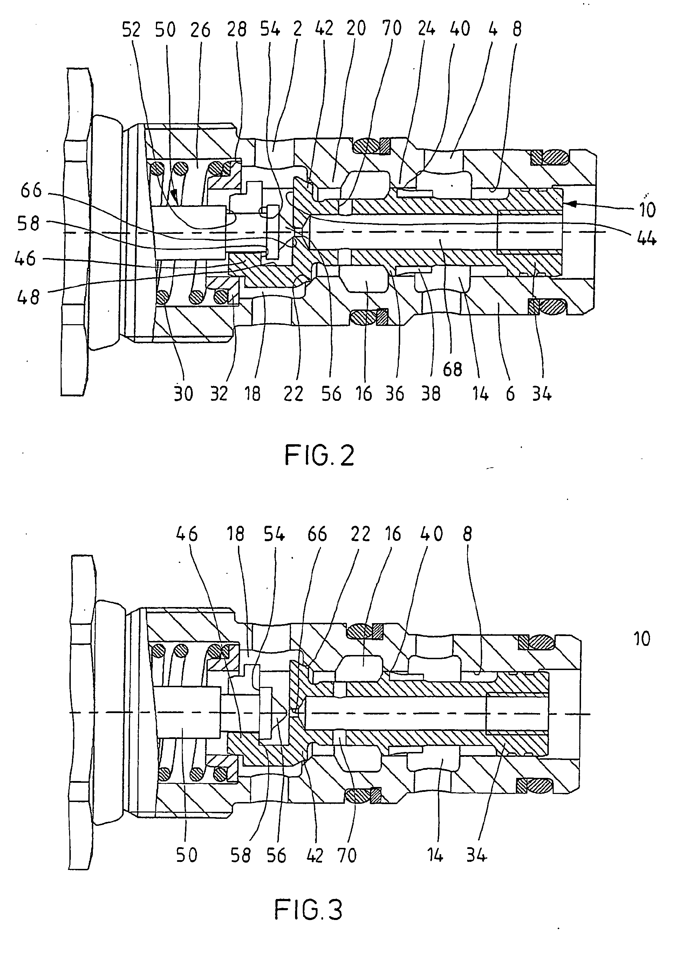

Figur 1 zeigt einen Teilschnitt eines stetig verstellbaren Wegeventils 1 mit einem Zulaufanschluß 2 und einem Ablaufanschluß 4. Es sei angenommen, dass der Zulaufanschluß 2 an einen Verbraucher angeschlossen ist und somit mit einem Lastdruck beaufschlagt ist, während der Ablaufanschluß 4 an einen Tank oder dergleichen angeschlossen ist. Das Wegeventil 1 ist in Cartridgebauweise ausgeführt und hat eine Ventilbüchse 6 an der die beiden Anschlüsse 2, 4 ausgebildet sind und in deren Bohrung 8 ein Sitzschieber 10 axial verschiebbar geführt ist. Die Betätigung des Sitzschiebers 10 erfolgt mittels eines Proportionalmagneten 12, der bei dem dargestellten Ausführungsbeispiel als ziehender Magnet ausgeführt ist. Der Proportionalmagnet 12 ist an die Ventilbüchse 6 angeschraubt. Weitere Einzelheiten des Wegeventils 1 werden anhand der vergrößerten Darstellung in Figur 2 erläutert.

Die Bohrung 8 der Ventilbüchse 6 ist in Radialrichtung zu einem Ablaufraum 14, einem Überströmraum 16 und einem Zulaufraum 18 erweitert, wobei der Ablaufraum 14 in dem als Bohrungsstern ausgeführten radial mündenden Ablaufanschluß 4 und der Zulaufraum 18 in dem ebenfalls als Bohrungsstern ausgeführten Zulaufanschluß 2 mündet. An einem Steg 20 der Ventilbüchse 6 zwischen dem Überströmraum 16 und dem Zulaufraum 18 ist ein Ventilsitz 22 ausgebildet. Der Überströmraum 16 ist vom Ablaufraum 14 durch einen Steuersteg 24 der Ventilbüchse 6 getrennt, der gemeinsam mit dem im folgenden noch näher beschriebenen Sitzschieber 10 in der Wegeventilfunktion den Ablaufquerschnitt begrenzt.

In Figur 2 links an den Zulaufraum 18 schließt sich ein Federraum 26 an, der über eine Radialschulter 28 in Radialrichtung gegenüber dem zulaufraum 18 erweitert ist. An dieser Radialschulter 28 ist eine Regelfeder 30 über einen Federteller 32 abgestützt.

Der Sitzschieber 10 hat an seinem vom Ventilsitz 22 entfernten Endabschnitt einen Führungsbund 34, der dichtend an der Innenumfangsfläche der Bohrung 8 anliegt.

Im Abstand zum Führungsbund 34 hat der Sitzschieber 10 einen Steuerbund 36, der in der dargestellten Grundposition etwa im Bereich des Steges 24 ausgebildet ist. Der Steuerbund 36 ist zur Ablaufkammer 14 hin mit Steuerkerben 38 versehen, durch die eine Steuerkante 40 ausgebildet ist. Diese Steuerkante 40 ist in der dargestellten Grundposition von der Umfangsfläche des Steuersteges 24 überdeckt, so dass die Verbindung zwischen dem Überströmraum 16 und dem Ablaufraum 14 abgesperrt ist. Diese Verbindung wird erst nach Durchfahren eines Anfangshubs des Sitzschiebers 10 geöffnet.

Im Bereich des linken Endabschnittes des Sitzschiebers 10 ist ein Schließkegel 42 vorgesehen, der in der dargestellten Grundstellung mit seiner Kegelfläche auf dem Ventilsitz 22 aufliegt, so dass dieser geschlossen ist.

An einer Stirnfläche 44 des Schließkegels 42 ist eine Mitnahmeklaue 46 ausgebildet, die eine radial verlaufende, einseitig verschlossene Klauenausnehmung 48 hat. Diese Mitnahmeklaue 46 steht in Eingriff mit einem Stößel 50, der an seinem dargestellten Endabschnitt eine Ringnut hat, die durch zwei Ringschultern 52 und 54 begrenzt ist. Die in Figur 2 rechte Ringschulter 54 ist durch einen Ringsteg gebildet, an den sich ein Vorsteuerventilkegel 56 anschließt. Die Mitnahmeklaue 46 hat eine Mitnahmeschulter 58, die in der dargestellten Grundposition im Axialabstand zur Ringschulter 54 des Stößels 50 angeordnet ist.

Der Stößel 50 ist mit einem Anker 60 in einem Polrohr 62 des Proportionalmagneten 12 axial verschiebbar geführt und kann durch Bestromung der Spule (nicht dargestellt) des Proportionalmagneten 12 in der Darstellung gemäß Figur 1 aus seiner Grundposition nach links verschoben werden. Der Stößel 50 mit dem Vorsteuerventilkegel 56 und der Anker 60 sind über eine Nachführfeder 64 in die dargestellte Grundposition vorgespannt. In dieser Grundposition liegt der Vorsteuerventilkegel 56 auf einem in der Stirnfläche 44 des Sitzschiebers 10 mündenden Vorsteuerventilsitz 66 auf. Dieser ist in Figur 2 nach rechts hin zu einer Axialbohrung 68 des Sitzschiebers 10 erweitert. Diese mündet in der in Figur 2 rechten, rückwärtigen Stirnfläche des Sitzschiebers 10. Im Mantel des Sitzschiebers 10 im Bereich zwischen dem Schließkegel 42 und dem Steuerbund 36 sind Mantelbohrungen 70 vorgesehen, über die die Axialbohrung 68 mit dem Überströmraum 16 verbunden ist.

Gemäß den vorbeschriebenen Ausführungen ist in der Grundposition des erfindungsgemäßen Wegeventils der Proportionalmagnet 12 unbestromt, so dass der Vorsteuerventilkegel 56 auf dem Vorsteuerventilsitz 66 aufsitzt. Der Schließkegel 42 sitzt auf dem Ventilsitz 22 auf und die Steuerkante 40 hat die Verbindung zwischen dem Ablaufraum 14 und dem Überströmraum 16 zugesteuert. In dem Fall, in dem am Zulaufanschluß 2 ein Lastdruck anliegt, ist diese Last durch die beiden Ventilsitze (Schließkegel 42/Ventilsitz 22; Vorsteuerventilkegel 56/vorsteuerventilsitz 66) leckagefrei zum Tank hin abgesperrt. Der Vorsteuerventilkegel 56 und der Schließkegel 42 werden dabei mit einer vom Lastdruck abhängenden Kraft und der Kraft der Nachführfeder 64 gegen den jeweils zugordneten Ventilsitz 66 bzw. 22 gedrückt.

Zum Absenken der Last, d.h. zum Öffnen des Zulaufs zum Ablauf hin wird der Proportionalmagnet bestromt, wobei die Stromstärke so gewählt ist, dass der Stößel 50 mit dem Vorsteuerventilkegel 56 von seinem Vorsteuerventilsitz 66 gegen die dem Lastdruck entsprechende Kraft abgehoben werden kann. Die Magnetkraft muss dabei so gewählt sein, dass der Vorsteuerkegel 56 auch bei dem größten wirksamen Lastdruck, beispielsweise in Höhe von 450 bar zuverlässig abgehoben werden kann. Figur 3 zeigt das Wegeventil 1 bei geöffneter Vorsteuerung.

Bei abgehobenen Vorsteuerventilkegel 56 ist der Vorsteuerventilsitz 66 geöffnet, so dass Druckmittel vom Zulaufraum 18 in die Axialbohrung 68 eintreten kann, so dass die in Figur 3 rechte Stirnfläche des Sitzschiebers 10 mit dem Lastdruck beaufschlagt ist. Dieser liegt über die Mantelbohrungen 70 auch im Überströmraum 16 an, so dass die Rückseite des Schließkegels 42 ebenfalls mit dem Lastdruck beaufschlagt ist. Wie Figur 3 entnehmbar ist, ist der Durchmesser des Ventilsitzes 22 größer als der Durchmesser des Führungsbundes 34, d.h. desjenigen Teils des Sitzschiebers 10, der in der Bohrung 8 geführt ist. Der Sitzschieber 10 ist somit druckausgeglichen, so dass zu seiner Axialverschiebung eine vergleichsweise geringe Kraft erforderlich ist, die vom Proportionalmagneten aufgebracht werden kann.

Die Lastdruckeinleitung in den Überströmraum 16 hat den Vorteil, dass selbst dann, wenn sich über die Lebensdauer des Wegeventils 1 hinweg gesehen eine Veränderung des Ventilsitzdurchmessers ergibt, eine Druckentlastung des Sitzschiebers 10 durch die Einleitung des Lastdruckes in den Überströmraum 16 nach wie vor gewährleistet ist - es erfolgt somit eine Art automatische Anpassung an derartige Verschleißerscheinungen.

Beim weiteren Verfahren des Stößels 50 läuft dieser - wie in Figur 3 dargestellt - mit seiner Ringschulter 54 auf die Mitnahmeschulter 58 der Mitnahmeklaue 46 auf, so dass in der Folge der Sitzschieber 10 vom Stößel 50 mitgenommen und von seinem Ventilsitz 22 abgehoben wird. Dabei ist allerdings noch die Verbindung zwischen dem Ablaufraum 14 und dem Überströmraum 16 durch die Steuerkante 40 geschlossen. Dieser erste Hub des Sitzschiebers 10 erfolgt ohne jede weitere Stromerhöhung am Proportionalmagneten.

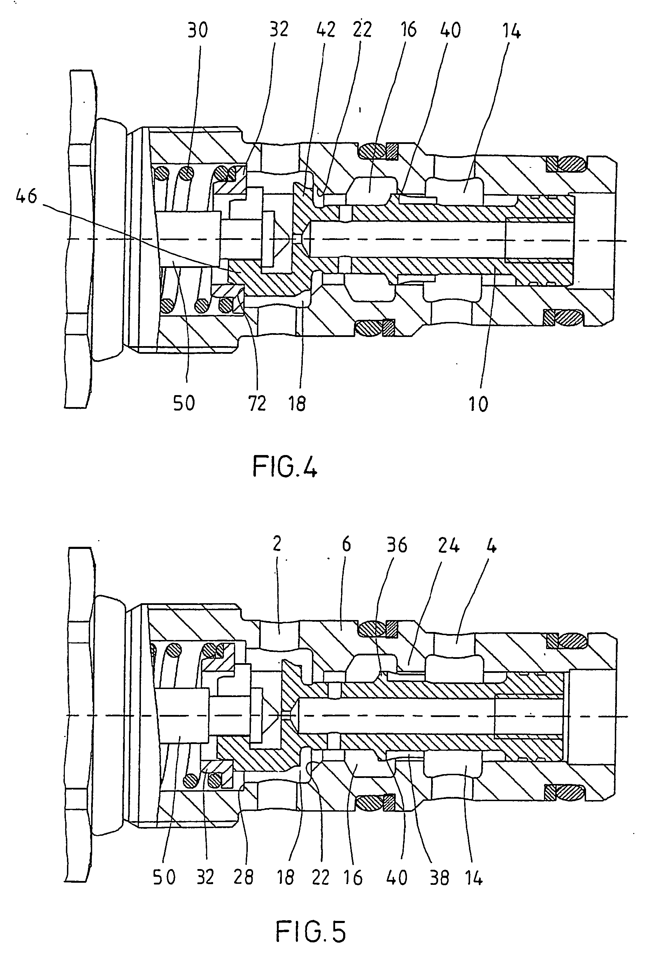

Nach einem vorbestimmten Hub läuft die Mitnahmeklaue 46 gemäß Fig. 4 mit einer Schulter 72 auf den Federteller 32 auf, so dass die weitere Axialverschiebung gegen die Kraft der vergleichsweise starken Regelfeder 30 erfolgen muss. In dieser Position ist dann der Schließkegel 42 vom Ventilsitz 22 abgehoben, so dass eine Verbindung vom Zulaufraum 18 zum Überströmraum 16 über den Ventilsitz 22 aufgesteuert ist. Die Verbindung vom Überströmraum 16 zum Ablaufraum 14 ist durch die Steuerkante 40 jedoch noch nicht oder zumindest in einem vernachlässigbaren Umfang aufgesteuert. Die Kraft der Regelfeder 30 ist so ausgelegt, dass die Magnetkraft, die gerade ausreichend war, um den Stößel 50 in der vorbeschriebenen Weise mit dem Sitzschieber 10 in die Anlageposition an den Federteller 32 zu ziehen, nicht ausreicht, um eine weitere Axialverschiebung des Sitzschiebers 10 in seine Wegeventilfunktion zu ermöglichen.

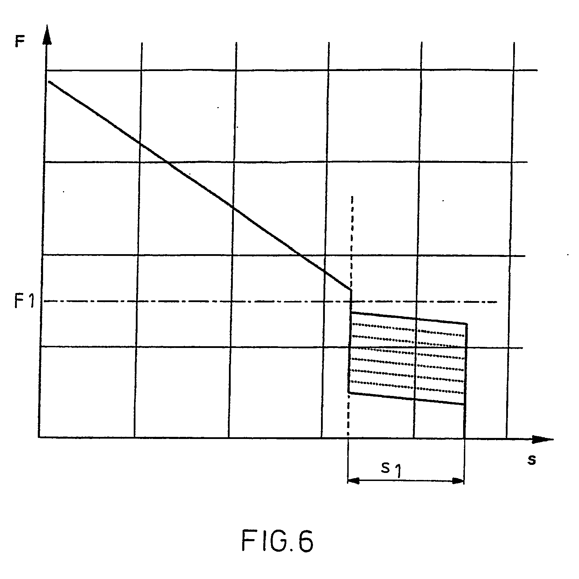

Zur Einleitung der Wegeventilfunktion muß die Stromstärke am Proportionalmagneten weiter erhöht werden, so dass der Stößel 50 und der Sitzschieber 10 gegen die Kraft der Regelfeder 30 bewegt werden können. Dieser Betriebszustand (Wegeventilfunktion) ist in Figur 5 dargestellt. Bei der weiteren Axialverschiebung des Stößels 50 hebt der Federteller 32 von der Radialschulter 28 der Ventilbüchse 6 ab und gleichzeitig wird über die Steuerkante 40 und die Steuerkerben 38 des Steuerbundes 36 ein Ablaufquerschnitt aufgesteuert, so dass das Druckmittel über den Zulaufanschluß 2, den Zulaufraum 18, den aufgesteuerten Ventilsitz 22, den Überströmraum 16, den aufgesteuerten Ablaufquerschnitt zwischen dem Steuersteg 24 und dem Steuerbund 36 zum Ablaufraum 14 und von dort über den Ablaufanschluß 4 zum Tank abströmen kann. Der Schließkegel 42 ist dabei so weit vom Ventilsitz 22 beabstandet, dass er einen vernachlässigbaren Einfluß auf die Druckmittelströmung hat.

Messungen haben ergeben, dass das erfindungsgemäße Wegeventil 1 ein in gewissem Umfang lastdruckunabhängiges Durchflussverhalten hat. Dabei wird der Sitzschieber 10 entsprechend dem anliegenden Lastdruck durch Strömungskräfte gegen die durch den Proportionalmagneten 12 vorgegebene Bewegungsrichtung in Schließrichtung beaufschlagt, wodurch sich der durch die Steuerkerben 38 aufgesteuerte Ablaufquerschnitt verringert, so dass die Ablaufmenge lastdruckunabhängig etwa gleich bleibt. Dieses lastdruckunabhängige Konstanthalten des Volumenstromes funktioniert selbstverständlich nicht so genau wie bei einer Individualdruckwaage - bei vielen Anwendungen reicht die erzielbare Genauigkeit jedoch aus.

Zum Zurückfahren des Wegeventils 1 in seine in Figur 1 dargestellte Grundposition erfolgt die vorbeschriebene Ansteuerung in umgekehrter Reihenfolge, wobei zunächst die Regelfeder 30 mit dem Federteller 32 an der Radialschulter 28 abgelegt und dann der Schließkegel 42 auf den Ventilsitz 22 aufgesetzt wird. Anschließend wird der Vorsteuerventilsitz 66 durch den Vorsteuerventilkegel 56 geschlossen, wobei die Rückführung des Stößels 50 und des Sitzschiebers 10 in ihre Grundposition durch die Kraft der Nachführfeder 64 erfolgt.

Die Kennlinie des vorbeschriebenen Wegeventils ist in Figur 6 dargestellt, wobei die erforderliche Magnetkraft über dem Hub des Stößels 50 dargestellt ist. In der Grundposition ist das Wegeventil geschlossen, der Stößel 50 ist auf seinen Maximalwert ausgefahren. Während des Aufsteuerns der Vorsteuerung, d.h. während des anfänglichen Abhebens des Vorsteuerventilkegels 56 vom Vorsteuerventilsitz 66 verbleibt der Sitzschieber 10 in seiner Grundposition. Je nach anliegendem Lastdruck muß vom Proportionalmagneten eine entsprechende Minimalkraft aufgebracht werden, um diesen anfänglichen Hub des Stößels 50 zu bewirken. Diese Magnetkraft ist um so größer, je höher der anliegende Lastdruck ist. In Figur 6 sind daher die Kennlinien für mehrere derartige Lastdrücke dargestellt. Nach einem vorbestimmten Anfangshub s1 läuft die Mitnahmeklaue 46 mit der Schulter 72 auf den Federteller 32 auf, so dass die weitere Verschiebung des Stößels 50 und damit die Axialverschiebung des Sitzschiebers 10 nur durch Erhöhung der Magnetkraft möglich ist. D.h. nach dem Hub s1 wird die Magnetkraft nochmals erhöht, so dass der Sitzschieber 10 gegen die Kraft der Regelfeder 30 verschoben wird. Der Hub des Stößels 50 und damit des Sitzschiebers 10 ist in dieser Wegeventilfunktion im wesentlichen proportional zur Magnetkraft F.

Wird zu Beginn des Aufsteuervorganges gleich eine Kraft F1 gewählt, so lässt sich die Vorsteuerung auch bei dem maximal möglichen Lastdruck von beispielsweise 450 bar öffnen.

Offenbart ist ein stetig verstellbares Wegeventil mit einem Sitzschieber, an dem ein Ventilkegel ausgebildet ist, der in der Grundposition des Wegeventils gegen einen Ventilsitz vorgespannt ist. Das Wegeventil ist mit einer Vorsteuerung ausgebildet, wozu im Schließkegel ein Vorsteuerventilsitz vorgesehen ist, der mit einem Vorsteuerventilkegel zusammenwirkt.

### Bezugszeichenliste:

- 1: stetig verstellbares Wegeventil
- 2: Zulaufanschluß
- 4: Ablaufanschluß
- 6: Ventilbüchse
- 8: Bohrung
- 10: Sitzschieber
- 12: Proportionalmagnet
- 14: Ablaufraum
- 16: Überströmraum
- 18: Zulaufraum
- 20: Steg
- 22: Ventilsitz
- 24: Steuersteg
- 26: Federraum
- 28: Radialschulter
- 30: Regelfeder
- 32: Federteller
- 34: Führungsbund
- 36: Steuerbund
- 38: Steuerkerben
- 40: Steuerkante
- 42: Schließkegel
- 44: Stirnfläche
- 46: Mitnahmeklaue
- 48: Klauenausnehmung
- 50: Stößel
- 52: Ringschulter
- 54: Ringschulter
- 56: Vorsteuerventilkegel
- 58: Mitnahmeschulter
- 60: Anker
- 62: Polrohr
- 64: Nachführfeder
- 66: Vorsteuerventilsitz
- 68: Axialbohrung
- 70: Mantelbohrung
- 72: Schulter

## Patentansprüche

1. Stetig verstellbares Wegeventil mit einem Ventilkörper, über den die Verbindung von einem Zulaufanschluß (2) zu einem Ablaufanschluß (4) aufsteuerbar ist und mit einer Sperreinrichtung zum im wesentlichen leckölfreien Absperren des Zulaufs (2), wobei die Sperreinrichtung mit einer Vorsteuerung ausgeführt ist, wobei der Ventilkörper als Sitzschieber (10) ausgeführt ist und einen Schließkegel (42) hat, der gegen einen Ventilsitz (22) vorgespannt ist, wobei der Sitzschieber (10) eine Steuerkante (40) hat, über die die Verbindung zwischen dem Zulauf (2) und dem Ablauf (4) in einer Wegeventilfunktion aufsteuerbar ist, wobei im Schließkegel (42) ein Vorsteuerventilsitz (66) ausgebildet ist, gegen den ein Vorsteuerventilkörper (50, 56) vorgespannt ist,
**dadurch gekennzeichnet, dass** der Vorsteuerventilkörper (50, 56) von dem Vorsteuerventilsitz (66) durch Bestromen eines Proportionalmagneten (12) abhebbar ist, um den Druckausgleich am Sitzschieber (10) vorzunehmen, und dass der Sitzschieber (10) vom Vorsteuerventilkörper (50, 56) mitnehmbar ist, um den Schließkegel (42) vom Ventilsitz (22) abzuheben.

2. Wegeventil nach Anspruch 1, wobei der Sitzschieber (10) nach einem vorbestimmten Hub (s1) zum Abheben des Schließkegels (42) vom Ventilsitz (22) auf eine Regelfeder (30) aufläuft.

3. Wegeventil nach Patentanspruch 2, wobei das sitzschieberseitige Ende der Regelfeder (30) an einem Federteller (32) abgestützt ist, auf den der Sitzschieber (10) nach dem Hub (s1) aufläuft.

4. Wegeventil nach einem der vorhergehenden Patentansprüche, wobei der Druckausgleich am Sitzschieber (10) mit dem Druck am Zulaufanschluss (2) erfolgt.

5. Wegeventil nach einem der vorhergehenden Patentansprüche, wobei der Vorsteuerventilkörper (56) in der Schließstellung des Schließkegels (42) vom Vorsteuerventilsitz (66) abhebbar ist.

6. Wegeventil nach einem der vorhergehenden Patentansprüche, wobei der Vorsteuerventilkegel (56) außerhalb des Sitzschiebers (10) geführt ist.

7. Wegeventil nach einem der vorhergehenden Patentansprüche, wobei der Vorsteuerventilkörper (50, 56) nach einem vorbestimmten Hub auf eine Mitnahmeschulter (58) des Sitzschiebers (10) aufläuft, so dass dieser in seine Wegeventilposition verschiebbar ist.

8. Wegeventil nach einem der vorhergehenden Patentansprüche, wobei der Sitzschieber (10) einen im Abstand zum Schließkegel (42) angeordneten Steuerbund (36) mit Steuerkerben (38) hat und von einer Axialbohrung (68) durchsetzt ist, die im Bereich des Schließkegels (42) zu einem Vorsteuerventilsitz (66) zurückgestuft ist.

9. Wegeventil nach Patentanspruch 8, wobei der Schließkegel (42) und der Steuerbund (36) in Axialrichtung einen Überströmraum (16) begrenzen, der mittels zumindest einer Mantelbohrung (70) des Sitzschiebers (10) mit der Axialbohrung (68) verbunden ist.

10. Wegeventil nach einem der vorhergehenden Patentansprüche, wobei der Stößel (50) des Proportionalmagneten (12) mit dem Vorsteuerventilkörper (56) verbunden ist.

11. Wegeventil nach Patentanspruch 10, wobei der Proportionalmagnet (12) ein ziehender Magnet ist.

12. Wegeventil nach Patentanspruch 10 oder 11 und 7, wobei der Sitzschieber (10) eine Mitnahmeklaue (46) hat, in die der ventilsitzseitige Endabschnitt des Vorsteuerventilkegels (56) oder des Stößels (50) eingreift, wobei in einer Grundstellung bei geschlossener Vorsteuerung eine rückwärtige, die Mitnahmeschulter (58) ausbildende Wandung der Mitnahmeklaue (46) in einem dem Anfangshub entsprechenden Abstand zu einer Ringschulter (54) des Vorsteuerventilkegels (56) bzw. des Stößels (50) ausgebildet ist.

13. Wegeventil nach einem der vorhergehenden Patentansprüche, wobei der Vorsteuerventilkegel (56) über eine Nachführfeder (64) in Richtung auf den Sitzschieber (10) vorgespannt ist.

## Claims

1. An infinitely variable directional valve comprising a valve body through which the connection from an inlet port (2) to a discharge port (4) can be controlled to be opened and comprising a blocking means for a substantially leakage-free shut-off of the inlet (2), the blocking means being designed to include a pilot control device, wherein the valve body is embodied as seat slide (10) and includes a closing cone (42) which is prestressed counter to a valve seat (22), wherein the seat slide (10) has a control edge (40) by which the connection between the inlet (2) and the discharge (4) can be controlled to be opened in a directional control valve function, wherein in the closing cone (42) a pilot control valve seat (66) is formed counter to which a pilot control valve body (50, 56) is prestressed, **characterized in that** the pilot control valve body (50, 56) is adapted to be lifted off the pilot control valve seat (66) by energizing a proportional magnet (12) in order to perform pressure compensation at the seat slide (10), and **in that** the seat slide (10) is adapted to be driven by the pilot control valve body (50, 56) so as to raise the closing cone (42) from the valve seat (22).

2. A directional valve according to claim 1, wherein the seat slide (10) abuts against a control spring (30) after a predetermined stroke (s1) for raising the closing cone (42) from the valve seat (22).

3. A directional valve according to claim 2, wherein the end of the control spring (30) on the side of the seat slide is supported on a valve spring retainer (32) against which the seat slide (10) abuts after the stroke (s1).

4. A directional valve according to any one of the preceding claims, wherein the pressure compensation at the seat slide (10) is carried out with the pressure at the inlet port (2).

5. A directional valve according to any one of the preceding claims, wherein the pilot control valve body (56) can be lifted off the pilot control valve seat (66) in the closing position of the closing cone (42).

6. A directional valve according to any one of the preceding claims, wherein the pilot control valve cone (56) is guided outside the seat slide (10).

7. A directional valve according to any one of the preceding claims, wherein after a predetermined stroke the pilot control valve body (50, 56) abuts against a driving shoulder (58) of the seat slide (10) so that the latter is movable into its directional control valve position.

8. A directional valve according to any one of the preceding claims, wherein the seat slide (10) comprises a control collar (36) including control notches (38) which is arranged at a distance from the closing cone (42) and through which an axial bore (68) is passed which is stepped back to a pilot control valve seat (66) in the area of the closing cone (42).

9. A directional valve according to claim 8, wherein the closing cone (42) and the control collar (36) confine, in axial direction, an overflow chamber (16) which is connected to the axial bore (68) by means of at least one jacket bore (70) of the seat slide (10).

10. A directional valve according to any one of the preceding claims, wherein the tappet (50) of the proportional magnet (12) is connected to the pilot control valve body (56).

11. A directional valve according to claim 10, wherein the proportional magnet (12) is a drawing magnet.

12. A directional valve according to claim 10 or 11 and 7, wherein the seat slide (10) includes an engaging dog (46) in which the end portion of the pilot control valve cone (56) or of the tappet (50) on the side of the valve seat engages, wherein in an initial position a rear wall of the engaging dog (46) forming the driving shoulder (58) is formed at a distance corresponding to the initial stroke from an annular shoulder (54) of the pilot control valve cone (56) and of the tappet (50), respectively.

13. A directional valve according to any one of the preceding claims, wherein the pilot control valve cone (56) is prestressed in the direction of the seat slide (10) via a tracking spring (64).

## Revendications

1. Soupape de distribution à variation continue comprenant un corps de soupape, par lequel est commandée la liaison d'un raccord d'admission (2) à un raccord d'évacuation (4) et comprenant un dispositif d'arrêt destiné à bloquer l'admission (2) sensiblement sans fuite d'huile, le dispositif d'arrêt étant conçu avec une commande pilote, le corps de soupape étant conçu comme un coulisseau de siège (10) et présentant un cône de fermeture (42), qui est précontraint contre un siège de soupape (22), et le coulisseau de siège (10) présentant une arête de commande (40), par laquelle peut être commandée la liaison entre l'admission (2) et l'évacuation (4) dans une fonction de soupape de distribution, un siège de soupape de commande pilote (66), contre lequel est précontraint un corps de soupape de commande pilote (50, 56), étant conçu dans le cône de fermeture (42), **caractérisée en ce que** le corps de soupape de commande pilote (50, 56) peut être soulevé du siège de soupape de commande pilote (66) en alimentant en courant un aimant proportionnel (12), afin de réaliser la compensation de pression sur le coulisseau de siège (10), et **en ce que** le coulisseau de siège (10) peut être entraîné par le corps de soupape de commande pilote (50, 56) afin de soulever le cône de fermeture (42) du siège de soupape (22).

2. Soupape de distribution selon la revendication 1, le coulisseau de siège (10), après une course prédéfinie (s1) destinée à soulever le cône de fermeture (42) du siège de soupape (22), se coinçant sur un ressort de régulation (30).

3. Soupape de distribution selon la revendication 2, l'extrémité côté coulisseau de siège du ressort de régulation (30) étant appuyée contre une cuvette de ressort (32) sur laquelle se coince le coulisseau de siège (10) après la course (s1).

4. Soupape de distribution selon l'une quelconque des revendications précédentes, la compensation de pression sur le coulisseau de siège (10) s'effectuant avec la pression sur le raccord d'admission (2).

5. Soupape de distribution selon l'une quelconque des revendications précédentes, le corps de soupape de commande pilote (56) dans la position fermée du cône de fermeture (42) pouvant être soulevé du siège de soupape de commande pilote (66).

6. Soupape de distribution selon l'une quelconque des revendications précédentes, le cône de soupape de commande pilote (56) étant guidé à l'extérieur du coulisseau de siège (10).

7. Soupape de distribution selon l'une quelconque des revendications précédentes, le corps de soupape de commande pilote (50, 56) se coinçant après une course prédéfinie sur un épaulement d'entraînement (58) du coulisseau de siège (10), de sorte que celui-ci est mobile dans sa position de soupape de distribution.

8. Soupape de distribution selon l'une quelconque des revendications précédentes, le coulisseau de siège (10) présentant une collerette de commande (36), disposée à distance du cône de fermeture (42), dotée d'entailles de commande (38) et étant traversé par un alésage axial (68) qui est rétrogradé dans la zone du cône de fermeture (42) par rapport à un siège de soupape de commande pilote (66).

9. Soupape de distribution selon la revendication 8, le cône de fermeture (42) et la collerette de commande (36) limitant dans la direction axiale un espace de débordement (16) qui est relié au moyen d'au moins un alésage de revêtement (70) du coulisseau de siège (10) à l'alésage axial (68).

10. Soupape de distribution selon l'une quelconque des revendications précédentes, le poussoir (50) de l'aimant proportionnel (12) étant relié au corps de soupape de commande pilote (56).

11. Soupape de distribution selon la revendication 10, l'aimant proportionnel (12) étant un aimant attractif.

12. Soupape de distribution selon la revendication 10 ou 11 et 7, le coulisseau de siège (10) présentant une griffe d'entraînement (46) dans laquelle se met en prise la section d'extrémité côté siège de soupape du cône de soupape de commande pilote (56) ou du poussoir (50), sachant que, dans une position de base lorsque la commande pilote est fermée, une paroi arrière de la griffe d'entraînement (46), formant l'épaulement d'entraînement (58), est conçue suivant une distance correspondant à la course initiale par rapport à un épaulement annulaire (54) du cône de soupape de commande pilote (56) et/ou du poussoir (50).

13. Soupape de distribution selon l'une quelconque des revendications précédentes, le cône de soupape de commande pilote (56) étant précontraint par un ressort d'ajustement (64) en direction du coulisseau de siège (10).
